# EUROPEAN PATENT APPLICATION

(11) **EP 4 450 276 A1**
(43) Date of publication of application: **23.10.2024**
(21) Application number: 23766353.9
(22) Date of filing: 27.01.2023
(51) Int. Cl.: B32B 15/08, B32B 15/18, C23C 26/00

(54) **ORGANIC RESIN-COATED STEEL SHEET**

(30) Priority: 11.03.2022 JP 2022038343
(71) Applicant: JFE Steel Corporation, Tokyo 100-0011 (JP)
(72) Inventor: AOYAMA Tomohiro, Tokyo 100-0011 (JP); FURUYA Shinichi, Tokyo 100-0011 (JP); MATSUDA Takeshi, Tokyo 100-0011 (JP); NAKAMICHI Haruo, Tokyo 100-0011 (JP); KAWANO Takashi, Tokyo 100-0011 (JP)
(74) Representative: Haseltine Lake Kempner LLP
(86) International application number: PCT/JP2023/002711
(87) International publication number: WO 2023/171173

(57) **Abstract**

An object of the present invention is to provide an organic resin-coated steel sheet that is to be subjected to complex forming in which press forming is difficult, that has low sliding resistance in a portion at risk of cracking when press forming is performed, and that has excellent press formability in a portion in which die galling is expected to occur due to high surface pressure. In the case where the organic resin-coated steel sheet is used as an automotive steel sheet, the steel sheet is also required to have sufficient film removability to be applicable in an alkaline degreasing process in a painting process and to further have excellent weldability. For such applications, a further object of the present invention is to provide an organic resin-coated steel sheet further having sufficient film removability to be applicable and excellent weldability.

An organic resin-coated steel sheet has an organic resin coating film having an average coating weight per side after drying of 0.2 g/m² or more and 2.0 g/m² or less on at least one surface thereof. The area fraction of thin film portions in which the coating weight of the organic resin coating film is 0.14 g/m² or less is 25.0% or less.

## Description

### Technical Field

The present invention relates to a steel sheet excellent in terms of slidability when press forming is performed. In particular, the present invention relates to a steel sheet, having an organic resin coating film, that is excellent in terms of formability even when severe drawing is performed, that allows the coating film to be removed by using an alkali, and that is excellent in terms of weldability.

### Background Art

Cold rolled steel sheets and hot rolled steel sheets, which are extensively used in a wide range of fields including automotive body applications, are generally subjected to press forming when used in such applications. Nowadays, since there are demands for integrated parts, which are intended to reduce the number of processes, and improvement in design effect, it is necessary to enable more complex forming. In the case where an attempt is made to enable more complex press forming, there is a possibility of significant negative effects on the productivity of automobiles due to steel sheet fracture caused by a degree of forming which exceeds the capacity of the steel sheet, die galling occurring when continuous press forming is performed, or the like.

Therefore, it is necessary to improve the press formability of the steel sheets.

Examples of a method for improving the press formability of cold rolled steel sheets and hot rolled steel sheets include a method involving the surface treatment of a die. Although this method is widely used, in the case of this method, it is not possible to adjust the die after surface treatment has been performed. In addition, there is also a problem of high cost. Therefore, there is a strong demand for improving the press formability of a steel sheet itself.

Examples of a method for improving press formability without performing surface treatment on a die include a method utilizing high-viscosity lubrication oil. However, in this case, poor degreasing may occur after press forming, and there is a possibility of a deterioration in paintability.

Therefore, as a technique for enabling press forming without utilizing the surface treatment of a die or high-viscosity lubrication oil, investigations are being conducted regarding various types of steel sheets having a lubrication-treated surface.

Patent Literature 1 discloses a technique in which a lubrication film is formed on the surface of a galvanized steel sheet by adding a synthesized resin powder to an acrylic resin coating film.

Patent Literature 2 discloses a technique in which a lubrication film is formed on the surface of a steel sheet by using lithium silicate as a coating film constituent and by adding a wax and a metallic soap as lubricants to the coating film.

Patent Literature 3 discloses a metal product having a lubrication-treated surface coated with a coating film which is formed by containing a lubricant in a polyurethane resin and which has a thickness of 0.5 um to 5 um and having excellent press formability.

Patent Literature 4 discloses a technique for forming an alkali-soluble organic coating film which is formed by adding a lubricant to an epoxy resin on the surface of a steel sheet.

### Citation List

### Patent Literature

PTL 1: Japanese Unexamined Patent Application Publication No. 9-170059
PTL 2: Japanese Unexamined Patent Application Publication No. 2002-307613
PTL 3: Japanese Unexamined Patent Application Publication No. 2000-309747
PTL 4: Japanese Unexamined Patent Application Publication No. 2000-167981

### Summary of Invention

### Technical Problem

However, in the case of Patent Literature 1 to Patent Literature 4, although lubrication properties are achieved due to the lubrication effect of the added lubricants or the like, press formability is not always sufficient when complex forming is performed.

The present invention has been made in view of the circumstances described above, and an object of the present invention is to provide an organic resin-coated steel sheet that is to be subjected to complex forming in which press forming is difficult, that has low sliding resistance in a portion at risk of cracking when press forming is performed, and that has excellent press formability in a portion in which die galling is expected to occur due to high surface pressure.

In addition, in the case where the organic resin-coated steel sheet is used as an automotive steel sheet, the steel sheet is also required to have sufficient film removability to be applicable in an alkaline degreasing process in a painting process and to further have excellent weldability. For such applications, a further object of the present invention is to provide an organic resin-coated steel sheet further having sufficient film removability to be applicable and excellent weldability.

### Solution to Problem

To solve the problems described above, the present inventors diligently conducted investigations focusing on the relationship between the uniformity of the thickness of a coating film formed on the surface of a steel sheet and slidability (press formability) when press forming is performed and, as a result, attained the knowledge below.

When sliding occurs between a steel sheet having an organic resin coating film on the surface thereof and a die, the coating film constituent is supplied to a gap between the steel sheet and the die. It is considered that, since shear deformation occurs in the coating film constituent more readily than in the steel sheet, the coating film constituent supplied to the gap between the steel sheet and the die functions as a lubricant, which results in an improvement in slidability. On the surface of a practical steel sheet, there are fine protrusions and recesses formed by performing rolling or the like. When sliding occurs between the steel sheet and the die, the protrusions of the steel sheet come into contact with the die to generate sliding resistance. Since a coating material containing an organic resin coating film constituent tends to be accumulated in the recesses of the steel sheet to form a thick coating film during from the coating to coating film drying processes, there is a tendency for the thickness of the organic resin coating film on the protrusions to decrease. In the case where a coating film having a sufficient thickness is not formed on the protrusions due to poor coatability of the organic resin coating film, a sufficient amount of coating film constituent is not supplied to the gap between the steel sheet and the die, and there is a decreased effect of improving slidability. Therefore, it was found that, to improve slidability between the steel sheet and the die, it is necessary to apply an organic resin coating film excellent in terms of organic resin coating film coatability to the steel sheet.

By conducting investigations regarding the organic resin coating film coatability described above, it was found that it is possible to evaluate the organic resin coating film coatability by determining the area fraction of the thin film portions on the protrusions of the steel sheet (area fraction of thin film portions).

Here, regarding the identification of a thin film portion, it was found that it is effective to identify, by using a Schottky field-emission-type SEM in which an energy-dispersive X-ray spectrometer is installed, a region of a characteristic X-ray image in which the intensity is equal to or less than a specified value as a thin film portion.

In addition, it was found that, in the case where the area fraction of the thin film portions, in which the local coating weight determined by using the method described above is 0.14 g/m² or less, is 25.0% or less with respect to the whole observation surface, the press formability (slidability) is excellent.

Moreover, by conducting investigations regarding the constituents, chemical composition, and properties of the organic resin coating film to achieve an area fraction of the thin film portions of 25.0% or less with respect to the whole observation surface, preferable conditions were found.

The present invention has been made based on the knowledge described above, and a summary of the present invention is as follows.
[1] An organic resin-coated steel sheet, the steel sheet having an organic resin coating film having an average coating weight per side after drying of 0.2 g/m² or more and 2.0 g/m² or less on at least one surface thereof,
   in which the area fraction of thin film portions in which the coating weight of the organic resin coating film is 0.14 g/m² or less is 25.0% or less.
[2] The organic resin-coated steel sheet according to [1], in which the average area of the thin film portions is 10.0 µm² or less.
[3] The organic resin-coated steel sheet according to [1] or [2], in which the area fraction of the thin film portions is determined by using a method in (1) and (2) below:
   (1) by using an X-ray spectrometer which is installed in a SEM, a characteristic X-ray image of the C-K line of the surface of the organic resin-coated steel sheet is captured at an acceleration voltage of 5 kV or higher and 20 kV or lower; and
   (2) based on the captured characteristic X-ray image of the C-K line, a thin film portion is defined as a region in which the characteristic X-ray intensity is equal to or lower than a threshold intensity corresponding to a local coating weight of 0.14 g/m², a non-thin film portion is defined as a region in which the characteristic X-ray intensity is higher than the threshold intensity, and the area fraction of the thin film portions is defined as (area of thin film portions)/((area of thin film portions) + (area of non-thin film portions)) × 100%.
[4] The organic resin-coated steel sheet according to any one of [1] to [3], in which the organic resin coating film is a coating film containing at least one of an acrylic resin, a urethane resin, and a phenol resin.
[5] The organic resin-coated steel sheet according to any one of [1] to [4], in which the organic resin coating film contains a wax in an amount of 50 mass% or less with respect to the total weight of the coating film.
[6] The organic resin-coated steel sheet according to [5], in which the wax is a hydrocarbon-based wax.
[7] The organic resin-coated steel sheet according to [5] or [6], in which the average particle diameter of the wax is 0.01 um or more and 4 um or less.
[8] The organic resin-coated steel sheet according to any one of [5] to [7], in which the organic resin coating film contains an anionic polymer-type dispersant in an amount of 5.0 mass% or less with respect to the total weight of the coating film.

In the present invention, "steel sheet" refers to a cold rolled steel sheet and a hot rolled steel sheet. Advantageous Effects of Invention

According to the present invention, it is possible to obtain an organic resin-coated steel sheet excellent in terms of press formability. There is a marked decrease in the friction coefficient between the organic resin-coated steel sheet and a die or the like. Therefore, it is possible to provide stably excellent press formability for a steel sheet having comparatively low strength which is subjected to complex forming. In addition, in the case of a high strength steel sheet where there is an increase in surface pressure when press forming is performed, since there is a decrease in sliding resistance in a portion at risk of cracking occurring when press forming is performed, it is possible to obtain a steel sheet having excellent press formability in a portion in which die galling is expected to occur due to high surface pressure. Moreover, there is no impediment to subsequent processes such as a welding process, a degreasing process, a chemical conversion process, a painting process, and the like.

In addition, it was confirmed that, in the case where the organic resin-coated steel sheet according to the present invention is used as an automotive steel sheet, the steel sheet has sufficient film removability to be applicable in an alkaline degreasing process in a painting process. Moreover, it was confirmed that it has excellent weldability.

In the description above, "high strength" denotes the assumption that the tensile strength (TS) is 440 MPa or higher, and "comparatively low strength" denotes the assumption that TS is lower than 440 MPa.

### Brief Description of Drawings

[Fig. 1] Fig. 1 is one example of a characteristic X-ray image (C-K line) of an organic resin-coated steel sheet.
[Fig. 2] Fig. 2 is a schematic front view illustrating a friction coefficient measurement apparatus.
[Fig. 3] Fig. 3 is a schematic perspective view illustrating the shape and size of a bead in Fig. 2. Description of Embodiments

Hereafter, embodiments of the present invention will be described.

An organic resin-coated steel sheet according to the present invention is a steel sheet which is manufactured by forming an organic coating film made of a resin or a resin appropriately containing a wax on the surface of a steel sheet. After a coating material prepared by dissolving or dispersing a resin in a solvent or, optionally, by further adding a wax to the solvent containing the resin, is applied to the surface of a steel sheet, the coating material is dried.

Hereafter, the reason why the coatability of an organic resin coating film has an effect on slidability when press forming is performed will be described first, and the coatability of an organic resin coating film will be described next.

The reason why the average coating weight per side after drying of an organic resin coating film which is formed on at least one surface of a steel sheet is set to be 0.2 g/m² or more and 2.0 g/m² or less will be described hereafter.

In the case where the average coating weight per side after drying is less than 0.2 g/m², it is not possible to achieve sufficient press formability. Therefore, the average coating weight per side after drying is set to be 0.2 g/m² or more. It is preferable that the average coating weight be 0.5 g/m² or more or more preferably 1.0 g/m² or more. On the other hand, in the case where the average coating weight per side after drying is more than 2.0 g/m², there may be a deterioration in weldability and film removability. Here, in the case where the average coating weight of the organic resin coating film after drying is more than 2.0 g/m², a thin film portion in which the local coating weight is 0.14 g/m² or less is less likely to be formed, and there is an advantage in that a deterioration in slidability due to an increase in the area fraction of the thin film portions, which is a problem to be solved by the present invention, is less likely to occur. However, in consideration of the disadvantages (deterioration in weldability and film removability) described above, the average coating weight is set to be 2.0 g/m² or less. In the case where the average coating weight of the coating film is 1.4 g/m² or less, an increase in the area fraction of the thin film portions in which the local coating weight is 0.14 g/m² or less becomes particularly noticeable, and there is a marked deterioration in slidability. Since it is possible to markedly alleviate the deterioration in slidability by using the method for providing a uniform film thickness according to the present invention, it is particularly preferable that the method for providing a uniform film thickness according to the present invention be applied to an organic resin-coated steel sheet on which the average coating weight of the organic resin coating film is 1.4 g/m² or less or more preferably 1.2 g/m² or less.

Hereafter, after the reason why the coatability of an organic resin coating film has an effect on slidability when press forming is performed has been described, the reason why the area fraction of the thin film portions in which the coating weight of the organic resin coating film is 0.14 g/m² or less is set to be 25.0% or less will be described.

When sliding occurs between a steel sheet having an organic resin coating film on the surface thereof and a die, the coating film constituent is supplied to a gap between the steel sheet and the die. It is considered that, since shear deformation occurs in the coating film constituent more readily than in the steel sheet, the coating film constituent supplied to the gap between the steel sheet and the die functions as a lubricant, which results in an improvement in slidability. On the surface of a practical steel sheet, there are fine protrusions and recesses formed by performing rolling or the like. When sliding occurs between the steel sheet and the die, the protrusions of the steel sheet come into contact with the die to generate sliding resistance. Since a coating material containing an organic resin coating film constituent tends to be accumulated in the recesses of the steel sheet to form a thick coating film during from the coating to coating film drying processes, there is a tendency for the thickness of the organic resin coating film on the protrusions to decrease. In the case where a coating film having a sufficient thickness is not formed on the protrusions due to poor coatability of the organic resin coating film, a sufficient amount of coating film constituent is not supplied to the gap between the steel sheet and the die, and there is a decreased effect of improving slidability. Therefore, to improve the slidability between the steel sheet and the die, it is necessary to apply an organic resin coating film excellent in terms of organic resin coating film coatability to the steel sheet. For this purpose, it is necessary that the area fraction of the thin film portions in which the coating weight of the organic resin coating film is 0.14 g/m² or less be 25.0% or less. It is preferable that the area fraction be 20.0% or less or more preferably 15.0% or less. On the other hand, since the organic resin coating film coatability improves with a decrease in the area fraction of the thin film portions, there is no particular limitation on the lower limit of the area fraction, and the area fraction may be 0%.

Moreover, it is preferable that the average area of the thin film portions be 10.0 µm² or less. The reason for this is because, for example, in the case where a coating film having a sufficient thickness is not formed on the protrusions, a sufficient amount of coating film constituent is not supplied to the gap between the steel sheet and the die, and there is a decreased effect of improving slidability as described above. Therefore, it is preferable that the average area of the thin film portions be 10.0 µm² or less, more preferably 9.5 µm² or less, or even more preferably 9.0 µm² or less. On the other hand, since the organic resin coating film coatability improves with a decrease in the average area of the thin film portions, there is no particular limitation on the lower limit of the average area of the thin film portions, and the average area may be 0 µm².

In addition, although there is no particular limitation on the average thickness of the organic resin coating film, it is preferable that the average thickness be 0.2 pm or more. In addition, it is preferable that the average thickness be 2.0 µm or less.

Examples of a method for controlling the area fraction of the thin film portions to be 25.0% or less and the average area of the thin film portions to be 10.0 µm² or less in the organic resin coating film include a method in which the viscosity of the coating material is controlled to be within a certain range. In the case where the viscosity is excessively low, since the coating material tends to be accumulated in the recesses, the area fraction of the thin film portions exceeds 25.0% due to a decrease in liquid thickness at the protrusions, and the average area of the thin film portions exceeds 10.0 µm² due to a decrease in the uniformity of the liquid thickness at the protrusions. Therefore, it is necessary that the viscosity of the coating material be equal to or higher than a certain value. Therefore, it is preferable that the viscosity of the coating material be 1.5 mPa·s or higher. On the other hand, in the case where the viscosity of the coating material is excessively high, since uneven application tends to occur, there is a deterioration in surface appearance due to a streak pattern occurring after the coating film has been formed. Therefore, it is necessary that the viscosity of the coating material be equal to or lower than a certain value. Therefore, it is preferable that the viscosity of the coating material be 8.0 mPa·s or lower.

In addition, in the case where there is an increase in the drying time of the coating film, since the coating material tends to be accumulated in the recesses due to the coating material spreading with a wetting action before the drying is completed, the area fraction of the thin film portions exceeds 25.0% due to a decrease in liquid thickness at the protrusions. In the case where there is a further increase in drying time, there may be a case where the average area of the thin film portions exceeds 10.0 µm². Therefore, by decreasing the drying time as a result of increasing the drying temperature as much as possible within a range in which the target properties of the coating film are achieved, it is possible to control the area fraction of the thin film portions in the organic resin coating film to be 25.0% or less. It is preferable that the drying time be 90 seconds or less. By further decreasing the drying time, it is also possible to control the average area of the thin film portions to be 10.0 µm² or less. Therefore, it is more preferable that the drying time be 60 seconds or less. On the other hand, in the case where the drying time is excessively short, there may be a case where the area fraction of the thin film portions exceeds 25.0% due to the coating material not sufficiently spreading with a wetting action or a case of a deterioration in corrosion resistance due to the coating material not being sufficiently dried. Therefore, it is preferable that the drying time be 2 seconds or more or more preferably 5 seconds or more.

By determining the area fraction of the thin film portions on the protrusions by using a SEM, it is possible to evaluate the coatability of the organic resin coating film described above. Moreover, by determining the average area of the thin film portions, it is possible to evaluate the coatability of an organic resin coating film which is more advantageous in terms of slidability.

It is possible to determine the area fraction of the thin film portions and the average area of the thin film portions by evaluating the thin film portions by using a characteristic X-ray generated by irradiating a sample with an electron beam. Since X-rays have higher permeability through materials than an electron beam, a characteristic X-ray image of the C-K line, which is the characteristic X-ray of the main constituent element of the organic resin coating film, may be captured by sufficiently increasing the acceleration voltage so that the incident electrons permeate even the thick film portions to reach the base steel.

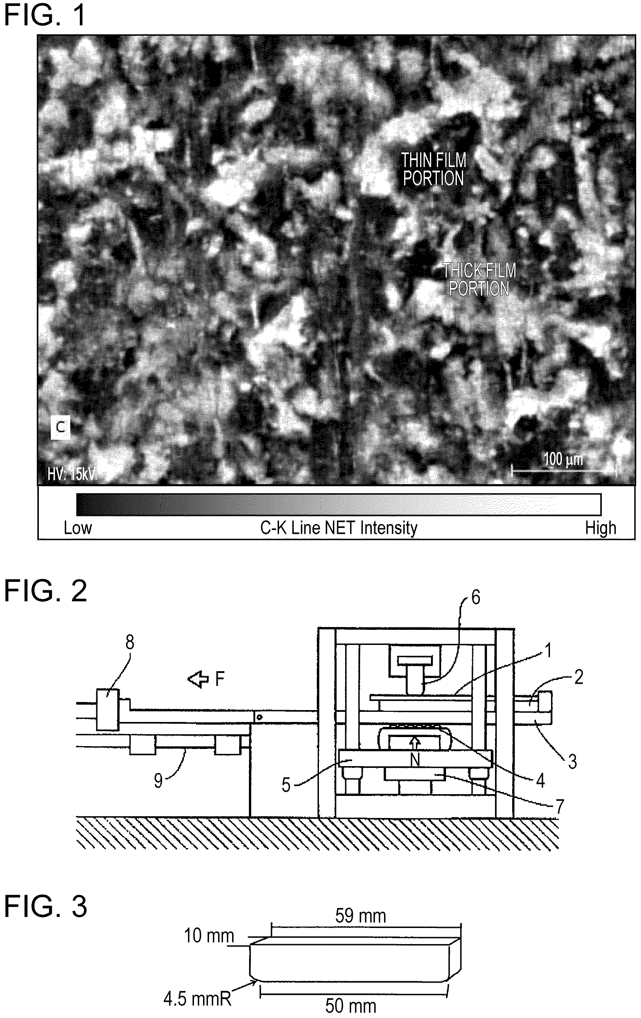

As illustrated in Fig. 1, since a region in which the C-K line intensity is high corresponds to a thick film portion, and since a region in which the C-K line intensity is low corresponds to a thin film portion, the proportion of regions in which the C-K line intensity is equal to or lower than a certain threshold can be calculated as the area fraction of the thin film portions from the characteristic X-ray image. Specifically, it is preferable that the area fraction of the thin film portions described above be determined by using the method described below:
(1) by using an X-ray spectrometer which is installed in a SEM, a characteristic X-ray image of the C-K line of the surface of the organic resin-coated steel sheet is captured at an acceleration voltage of 5 kV or higher and 20 kV or lower; and
(2) based on the captured characteristic X-ray image of the C-K line, a thin film portion is defined as a region in which the characteristic X-ray intensity is equal to or lower than a threshold intensity corresponding to a local coating weight of 0.14 g/m², a non-thin film portion is defined as a region in which the characteristic X-ray intensity is higher than the threshold intensity, and the area fraction of the thin film portions is defined as (area of thin film portions)/((area of thin film portions) + (area of non-thin film portions)) × 100%.

In addition, the average area of the thin film portions can be determined by, in the case where the surface area of the steel sheet is 900 µm² or more, measuring the area of each of the thin film portions and calculating the average value thereof. "Each of the thin film portions" mentioned above denotes each thin film portion which is surrounded as one thin film portion by non-thin film portions. In the case where the uniformity of the film thickness is evaluated based on the characteristic X-ray image, observation may be performed at an acceleration voltage of 5 kV or higher, at which it is possible to achieve a sufficient signal depth for the organic resin coating film. In the case where the acceleration voltage is excessively high, there is a decrease in the efficiency of the generation of the C-K line. Therefore, it is preferable that observation be performed at an acceleration voltage of 5 kV or higher. It is preferable that observation be performed at an acceleration voltage of 10 kV or higher. On the other hand, it is preferable that observation be performed at an acceleration voltage of 20 kV or lower.

In addition, regarding the magnification at which the characteristic X-ray image is captured for this evaluation, it is preferable that observation be performed at a magnification of about 100 times to 300 times, at which it is possible to observe protrusions and recesses generated by performing rolling with little effect of distortion at the edges of the image due to electron beam scanning.

The threshold intensity used for determining the area fraction of the thin film portions is defined as the intensity corresponding to a coating weight of 0.14 g/m², based on the relationship between the coating weight of the coating film measured separately by using a gravimetric method or the like and the average intensity of the characteristic X-ray image. A thin film portion is defined as a region in which the characteristic X-ray intensity is equal to or lower than the threshold intensity described above, a non-thin film portion is defined as a region in which the characteristic X-ray intensity is higher than the threshold intensity, and the area fraction of the thin film portions is defined as (area of thin film portions)/((area of thin film portions) + (area of non-thin film portions)) × 100%.

A case where the area fraction of the thin film portions is 25.0% or less is judged as a case of good organic resin coating film coatability.

The organic resin constituent will be described hereafter.

Although there is no particular limitation on the organic resin used in the present invention, it is preferable that the organic resin contain at least one of an acrylic resin, a urethane resin, and a phenol resin because this delivers satisfactory lubrication performance as a result of inhibiting the die and the steel sheet from coming into direct contact with each other when press forming is performed, and because this provides a high affinity between the organic resin and a wax when a hydrocarbon-based wax is added to the coating film, which results in further improved lubrication performance due to a uniform mixture of the organic resin and the wax being formed when sliding occurs. Here, it is preferable that the weight fraction of the organic resin with respect to the total weight of the coating film be 50% or more. It is more preferable that the weight fraction of the organic resin with respect to the total weight of the coating film be 70% or more. Although there is no particular limitation on the upper limit of the weight fraction, it is preferable that the weight fraction be 100% or less. The above-mentioned "weight fraction of the organic resin" denotes the total weight fraction of the resin contained that is selected from an acrylic resin, a urethane resin, and a phenol resin.

From the viewpoint of a painting environment, it is preferable that an organic resin constituent soluble or dispersible in an aqueous solvent be used. Although a mechanism by which excellent slidability is realized by forming the organic resin coating film on the steel sheet is unclear in many respects, it is considered that the organic resin coating film contributes to protecting the surface of the steel sheet and decreasing the sliding resistance when sliding occurs.

In the present invention, the organic resin coating film may contain a wax. As a result of the wax being contained, there is an improvement in the slidability of the coating film. In the case where the melting temperature of the wax is lower than 100°C, since the wax is melted due to frictional heat generated by sliding when press forming is performed, it is not possible to realize a sufficient lubrication effect. Therefore, it is preferable that the melting temperature of the wax be 100°C or higher. It is more preferable that the melting temperature of the wax be 120°C or higher. On the other hand, it is preferable that the melting temperature of the wax be 150°C or lower. From the viewpoints of cost and performance, it is preferable that the wax be a hydrocarbon-based wax. It is preferable that the average particle diameter of the wax be 0.01 um or more and 4 um or less. In the case where the average particle diameter is less than 0.01 um, there may be a case where it is not possible to realize the effect of improving slidability, and there is a deterioration in coating stability. Therefore, it is preferable that the average particle diameter of the wax be 0.01 um or more. It is more preferable that the average particle diameter of the wax be 0.2 um or more. On the other hand, in the case where the average particle diameter is more than 4 um, there may be a case where the wax is not well mixed in the coating film when the coating material is applied to the steel sheet, and there may be a case where, since the wax tends to be detached from the coating film when the steel sheet is handled after the coating material has been applied to the steel sheet, satisfactory slidability is not realized. Therefore, it is preferable that the average particle diameter of the wax be 4 um or less. It is more preferable that the average particle diameter of the wax be 2 um or less or even more preferably 1 um or less.

It is preferable that the organic resin coating film contain the wax in an amount of 50 mass% or less with respect to the total weight of the coating film to achieve better lubrication performance. It is more preferable that the content be 40 mass% or less or even more preferably 25 mass% or less. Since the lubrication performance of the wax is not delivered in the case where the content is excessively low, it is preferable that the content be 5 mass% or more or more preferably 10 mass% or more.

Here, "melting temperature of the wax" denotes the melting temperature measured in accordance with JIS K 7121:1987 "Testing Methods for Transition Temperatures of Plastics". In addition, "average particle shape of the wax" denotes the median diameter of the volume average particle diameter, which is determined by using a laser diffraction/scattering method.

In the present invention, in addition to the organic resin and the wax, the organic resin coating film may contain a surface conditioner, which is used for adjusting surface tension, a defoaming agent, a dispersant, and the like. In addition, an antirust agent, which improves antirust properties, may also be added.

There is no particular limitation on the dispersant, and any type of dispersant may be used. However, it is preferable that an anionic polymer-type dispersant be used. The anionic polymer-type dispersant is particularly effective for improving the dispersibility of particles having a diameter of several um or less, and can adsorb onto a hydrocarbon-based wax. Therefore, since there is an improvement in the dispersibility of the wax in the coating material, there is an improvement in the uniformity in the wax distribution in the formed coating film. As a result, there is a further improvement in slidability. Regarding the anionic polymer-type dispersant described above, it is preferable that at least one selected from the group consisting of sodium polycarboxylate, sodium polyacrylate, a carboxylic acid copolymer, and a sulfonic acid copolymer be used.

Although there is no particular limitation on the content of the dispersant in the coating film, it is preferable that the content be 0.2 mass% or more. In the case where the content of the dispersant in the coating film is 0.2 mass% or more, since there is an improvement in the dispersibility of the wax in the coating material, there is an improvement in the uniformity in the wax distribution in the formed coating film. As a result, there is a further improvement in slidability. It is more preferable that the content be 0.5 mass% or more or even more preferably 1.0 mass% or more. On the other hand, in the case where the content of the dispersant in the coating film is more than 5.0 mass%, there may be a deterioration in adhesiveness. Therefore, it is preferable that the content of the dispersant in the coating film be 5.0 mass% or less. It is more preferable that the content be 4.0 mass% or less or even more preferably 3.0 mass% or less.

Here, "content of the dispersant in the coating film" denotes the proportion of the mass of the dispersant with respect to the total weight of the coating film.

Since the present invention produces particularly excellent effects in the case where the surface roughness Ra of the base steel sheet is 0.4 um to 2.5 um and the weight fraction of the organic resin with respect to the total weight of the coating film is 50 mass% to 100 mass%, it is preferable that the surface roughness Ra of the base steel sheet and the weight fraction of the organic resin be within the ranges described above. It is preferable that the weight fraction of the organic resin with respect to the total weight of the coating film be 50 mass% or more or more preferably 70 mass% or more. On the other hand, it is preferable that the weight fraction of the organic resin with respect to the total weight of the coating film be 100 mass% or less or more preferably 90 mass% or less. In the case of conditions outside the ranges described above, the coating material tends to be accumulated in the recesses of the steel sheet, and there is a deterioration in slidability due to a decrease in the coating weight of the coating film on the protrusions of the steel sheet. In the case of conditions within the ranges described above, the coating weight of the coating film on the protrusions of the steel sheet is sufficient for achieving excellent slidability. Here, "weight fraction of the organic resin with respect to the total weight of the coating film" above denotes the weight fraction after drying.

Hereafter, the method for manufacturing the steel sheet according to the present invention will be described.

The method for manufacturing the organic resin-coated steel sheet according to the present invention is a method for manufacturing a steel sheet having an organic resin coating film formed of a resin or a resin containing a wax on the surface thereof. After a coating material prepared by dissolving or dispersing a resin in a solvent or, optionally, by further adding a wax to the solvent containing the resin, is applied to the surface of a steel sheet, the coating material is dried. Although there is no particular limitation on the method for applying the coating material, examples of the method include a method utilizing a roll coater or a bar coater and a method involving spraying, dipping, or brushing. The steel sheet to which the coating material has been applied may be dried by using a common method. Examples of the drying method include a method utilizing hot air, an induction heater, or an infrared heater. It is preferable that the maximum reached temperature of the steel sheet when drying is performed be 60°C or higher and 150°C or lower. In the case where the maximum reached temperature of the steel sheet when drying is performed is lower than 60°C, since it takes a long time to dry the steel sheet, there is a variation in the coating weight of the organic resin coating film, which results in an increase in the area fraction of the thin film portions in which the local coating weight of the coating film is 0.14 g/m² or less, and which may result in a deterioration in antirust properties. Therefore, it is preferable that the maximum reached temperature of the steel sheet when drying is performed be 60°C or higher or more preferably 80°C or higher. On the other hand, in the case where the maximum reached temperature is higher than 150°C, there may be a case of a deterioration in film removability. Therefore, it is preferable that the maximum reached temperature of the steel sheet when drying is performed be 150°C or lower or more preferably 130°C or lower. As described above, it is preferable that the drying time be 2 seconds or more. It is preferable that the drying time be 90 seconds or less.

Examples of a method for controlling the coating weight of the organic resin after drying has been performed include a method for controlling the amount of the coating material applied by pressing a rubber roll against the surface of the steel sheet after the coating material has been applied or by controlling the pressing pressure, rotational speed, and the like of the roll coater.

Moreover, since the total solid concentration in the coating material also has an effect on the coating weight of the organic resin after drying, it is preferable that the concentration of the coating material be appropriately adjusted.

Regarding the methods for judging whether or not the area fraction of the thin film portions of the organic resin coating film is 25% or less and whether or not the average area of the thin film portions is 10.0 µm² or less, it is possible to achieve sufficient evaluation accuracy by taking a plurality of (for example, three or more) sample materials having a size that allows them to be loaded into a SEM apparatus (for example, 8 mm square or more and 100 mm square or less) from randomly selected positions of the organic resin-coated steel sheet manufactured by using the manufacturing method described above, acquiring characteristic X-ray images from five or more fields of view for each of the sample materials under the observation and analysis conditions described above, and evaluating the area fraction of the thin film portions and the average area of the thin film portions. Here, the threshold used for determining the area fraction of the thin film portions is defined as the intensity corresponding to a coating weight of 0.14 g/m², based on the relationship between the coating weight of the coating film measured separately by using a gravimetric method or the like and the average intensity of the characteristic X-ray image, and it is possible to judge a case where the area fraction of the thin film portions in which the characteristic X-ray intensity is equal to or lower than the threshold is 25% or less as a case of a steel sheet having excellent slidability. Moreover, it is possible to judge a case where the average area of the thin film portions is 10.0 µm² or less as a case of a steel sheet having more excellent slidability.

Regarding a calibration curve for determining the characteristic X-ray intensity corresponding to the coating weight of the coating film, by exploiting the fact that the NET intensity of the characteristic X-ray is almost proportional to the coating weight of the coating film, the coating weight of the coating film measured by using a gravimetric method when the average NET intensity of the characteristic X-ray is zero is defined as zero, that is, the intercept is defined as the origin, and a straight line connecting the origin and a point determined by the coating weight of the coating film measured by using a gravimetric method and the average NET intensity of the characteristic X-ray is used as the calibration curve. Here, "NET intensity" denotes an intensity obtained by subtracting a background intensity from the characteristic X-ray intensity.

In addition, regarding a method for determining the weight of the coating film by using a gravimetric method, the organic resin-coated steel sheet is immersed in an alkaline solution to dissolve the organic resin portion only, and the weight of the coating film is determined from a change in steel sheet weight after the dissolution. The average intensity of the characteristic X-ray is defined as the average value of all data in the measurement of the area fractions of the thin film portions.

Although the present invention has been described above in accordance with an embodiment of the present invention, the present invention is not limited to the descriptions and figures of the present embodiment which form part of the disclosure of the present invention. That is, other embodiments, examples, operational techniques, and the like which are implemented based on the present embodiment by those skilled in the art are all within the scope of the present invention.

### EXAMPLES

Hereafter, the present invention will be described in accordance with examples. Here, the present invention is not limited to the examples below.

Steel sheets having a size of 350 mm × 230 mm which were cut from a cold rolled steel sheet (TS: 270 MPa) having a thickness of 0.8 mm were used as base materials for organic resin coating films.

After the cut steel sheets were subjected to an ultrasonic cleaning process in a 50 vol% toluene-50 vol% ethanol solvent for 5 minutes, the cleaned steel sheets were dried by using a blower, and the dried steel sheets were subjected to a degreasing treatment by using an alkaline degreasing agent, that is, FINE CLEANER E6403 (produced by Japan Parkerizing Co., Ltd.). In the degreasing treatment, the test specimens were immersed in a degreasing solution having a degreasing agent concentration of 20 g/L at a temperature of 40°C for 2 minutes and were then washed with tap water, and the washed steel sheets were dried by using a blower. After the coating materials given in Table 1 were applied to the surfaces of the steel sheets prepared as described above by using a bar coater, the coated steel sheets were baked and dried by using an induction heater (IH) to prepare steel sheets having lubrication organic coating films in Table 2. Here, the temperatures at which the samples were baked to form the coating films are given in Table 2. These samples were evaluated by using the methods described below, and the evaluation results are given in table 2.

The arithmetic average roughness Ra of the steel sheets used was 0.8 um. It is possible to determine the arithmetic average roughness Ra (µm) of the steel sheets in accordance with JIS B 0633:2001 (ISO 4288:1996). The cut-off value and the reference length were 0.8 mm, and the evaluation length was 4 mm.

**[Table 1]**

| Coating Material No. | Base Resin | Wax | | | | Dispersant | |
|---|---|---|---|---|---|---|---|
| | Type | Type | Mass with Respect to Total Weight of Resin Coating Film (%) | Melting Temperature (°C) | Particle Diameter (µm) | Type | Mass with Respect to Total Weight of Resin Coating Film (%) |
| 1 | Phenol | None | 0 | - | - | - | - |
| 2 | Phenol | Polyethylene | 10 | 110 | 0.60 | - | - |
| 3 | Phenol | Polyethylene | 20 | 110 | 0.60 | - | - |
| 4 | Phenol | Polyethylene | 50 | 110 | 0.60 | - | - |
| 5 | Phenol | Polyethylene | 60 | 110 | 0.60 | - | - |
| 6 | Phenol | Polyethylene | 20 | 132 | 0.60 | - | - |
| 7 | Phenol | Polyethylene | 20 | 110 | 0.20 | - | - |
| 8 | Phenol | Polyethylene | 20 | 110 | 1.00 | - | - |
| 9 | Phenol | Polyethylene | 20 | 110 | 4.00 | - | - |
| 10 | Phenol | Polyethylene | 20 | 110 | 10.00 | - | - |
| 11 | Phenol | Polyethylene | 20 | 135 | 0.05 | - | - |
| 12 | Phenol | Paraffin | 20 | 70 | 1.00 | - | - |
| 13 | Phenol | Fischer-Tropsch | 20 | 113 | 1.00 | - | - |
| 14 | Acrylic | None | 0 | - | - | - | - |
| 15 | Acrylic | Polyethylene | 20 | 110 | 0.60 | - | - |
| 16 | Urethane | None | 0 | - | - | - | - |
| 17 | Urethane | Polyethylene | 20 | 110 | 0.60 | - | - |
| 18 | Epoxy | None | 0 | - | - | - | - |
| 19 | Epoxy | Polyethylene | 20 | 110 | 0.60 | - | - |
| 20 | Phenol | Polyethylene | 20 | 110 | 0.60 | Sodium Polycarboxylate | 0.5 |
| 21 | Phenol | Polyethylene | 20 | 110 | 0.60 | Sodium Polycarboxylate | 1.0 |
| 22 | Phenol | Polyethylene | 20 | 110 | 0.60 | Sodium Polycarboxylate | 3.0 |
| 23 | Phenol | Polyethylene | 20 | 110 | 0.60 | Sodium Polycarboxylate | 5.0 |
| 24 | Phenol | Polyethylene | 20 | 110 | 0.60 | Sodium Polyacrylate | 1.0 |
| 25 | Phenol | Polyethylene | 20 | 110 | 0.60 | Carboxylic Acid Copolymer | 1.0 |
| 26 | Phenol | Polyethylene | 20 | 110 | 0.60 | Sulfonic Acid Copolymer | 1.0 |

**[Table 2]**

| Steel Sheet No. | Coating Material No. | Coating Weight (g/m²) | Coating Film Baking Temp. (°C) | Evaluation Items | | | | | | | | Note |
|---|---|---|---|---|---|---|---|---|---|---|---|---|
| | | | | Organic Coating Film Coatability | | | Slidability | | Film Removability | Weldability | Comprehensive Evaluation | |
| | | | | Area Fraction of Thin Film Portions (%) | Average Area of Thin Film Portions (µm²) | Evaluation | Friction Coefficient | Evaluation | | | | |
| 1 | 1 | 0.8 | 80 | 24.9 | 32.5 | ○ | 0.110 | ○ | ⊚ | ○ | ○ | Inventive Example |
| 2 | 1 | 0.8 | 55 | 31.2 | 35.7 | × | 0.138 | × | ⊚ | ○ | × | Comparative Example |
| 3 | 1 | 0.8 | 90 | 24.6 | 31.9 | ○ | 0.102 | ○ | ⊚ | ○ | ○ | Inventive Example |
| 4 | 2 | 0.8 | 80 | 24.7 | 31.8 | ○ | 0.101 | ○ | ⊚ | ○ | ○ | Inventive Example |
| 5 | 3 | 0.8 | 80 | 24.1 | 11.3 | ○ | 0.083 | ○ | ⊚ | ○ | ○ | Inventive Example |
| 6 | 3 | 1.4 | 80 | 20.3 | 9.8 | ○ | 0.079 | ○ | ⊚ | ○ | ⊚ | Inventive Example |
| 7 | 3 | 1.8 | 80 | 18.2 | 9.2 | ○ | 0.076 | ○ | ⊚ | ○ | ⊚ | Inventive Example |
| 8 | 3 | 0.4 | 80 | 24.8 | 20.1 | ○ | 0.101 | ○ | ⊚ | ○ | ○ | Inventive Example |
| 9 | 3 | 0.1 | 80 | 26.9 | 51.2 | × | 0.173 | × | ⊚ | ○ | × | Comparative Example |
| 10 | 3 | 0.2 | 80 | 25.0 | 28.2 | ○ | 0.129 | ○ | ⊚ | ○ | ○ | Inventive Example |
| 11 | 3 | 2.0 | 80 | 14.3 | 9.0 | ⊚ | 0.074 | ○ | ⊚ | ○ | ⊚ | Inventive Example |
| 12 | 3 | 2.3 | 80 | 18.0 | 8.8 | ○ | 0.071 | ⊚ | × | × | × | Comparative Example |
| 13 | 3 | 3.0 | 80 | 6.4 | 4.3 | ○ | 0.060 | ⊚ | × | × | × | Comparative Example |
| 14 | 3 | 0.8 | 55 | 31.0 | 36.8 | × | 0.148 | × | ⊚ | ○ | × | Comparative Example |
| 15 | 3 | 1.4 | 55 | 28.4 | 33.6 | × | 0.145 | × | ⊚ | ○ | × | Comparative Example |
| 16 | 3 | 1.8 | 55 | 26.1 | 22.1 | × | 0.131 | × | ⊚ | ○ | × | Comparative Example |
| 17 | 3 | 2.3 | 55 | 22.0 | 13.1 | ○ | 0.100 | ○ | × | × | × | Comparative Example |
| 18 | 3 | 0.8 | 90 | 23.5 | 9.7 | ○ | 0.077 | ○ | ○ | ○ | ⊚ | Inventive Example |
| 19 | 3 | 1.4 | 90 | 20.0 | 9.3 | ○ | 0.075 | ○ | ○ | ○ | ⊚ | Inventive Example |
| 20 | 3 | 1.8 | 90 | 17.9 | 8.7 | ○ | 0.074 | ○ | ○ | ○ | ⊚ | Inventive Example |
| 21 | 3 | 2.0 | 90 | 14.0 | 8.4 | ○ | 0.069 | ○ | ○ | ○ | ⊚ | Inventive Example |
| 22 | 4 | 0.8 | 80 | 24.4 | 11.4 | ○ | 0.100 | ○ | ○ | ○ | ○ | Inventive Example |
| 23 | 5 | 0.8 | 80 | 25.8 | 14.2 | × | 0.136 | × | ⊚ | ○ | × | Comparative Example |
| 24 | 5 | 1.2 | 80 | 24.7 | 12.5 | ○ | 0.126 | ○ | ○ | ○ | ○ | Inventive Example |
| 25 | 6 | 0.8 | 80 | 22.4 | 9.8 | ○ | 0.075 | ○ | ○ | ○ | ⊚ | Inventive Example |
| 26 | 7 | 0.8 | 80 | 23.3 | 12.1 | ○ | 0.081 | ○ | ○ | ○ | ○ | Inventive Example |
| 27 | 8 | 0.8 | 80 | 23.4 | 13.4 | ○ | 0.096 | ○ | ○ | ○ | ○ | Inventive Example |
| 28 | 9 | 0.8 | 80 | 24.9 | 16.3 | ○ | 0.128 | ○ | ○ | ○ | ○ | Inventive Example |
| 29 | 10 | 0.8 | 80 | 26.4 | 23.5 | × | 0.146 | × | ⊚ | ○ | × | Comparative Example |
| 30 | 10 | 1.2 | 80 | 24.9 | 19.8 | ○ | 0.127 | ○ | ○ | ○ | ○ | Inventive Example |
| 31 | 11 | 0.8 | 80 | 22.8 | 9.8 | ○ | 0.068 | ○ | ○ | ○ | ⊚ | Inventive Example |
| 32 | 12 | 0.8 | 80 | 26.4 | 22.9 | × | 0.190 | × | ⊚ | ○ | × | Comparative Example |
| 33 | 12 | 1.2 | 80 | 24.8 | 19.6 | ○ | 0.129 | ○ | ○ | ○ | ○ | Inventive Example |
| 34 | 13 | 0.8 | 80 | 24.4 | 15.4 | ○ | 0.112 | ○ | ○ | ○ | ○ | Inventive Example |
| 35 | 14 | 0.8 | 80 | 24.9 | 14.6 | ○ | 0.105 | ○ | ○ | ○ | ○ | Inventive Example |
| 36 | 14 | 0.8 | 55 | 30.9 | 31.2 | × | 0.135 | × | ⊚ | ○ | × | Comparative Example |
| 37 | 14 | 0.8 | 90 | 24.4 | 13.2 | ○ | 0.101 | ○ | ○ | ○ | ○ | Inventive Example |
| 38 | 15 | 0.8 | 80 | 24.8 | 14.4 | ○ | 0.101 | ○ | ○ | ○ | ○ | Inventive Example |
| 39 | 15 | 0.8 | 55 | 28.8 | 30.8 | × | 0.131 | × | ⊚ | ○ | × | Comparative Example |
| 40 | 15 | 0.8 | 90 | 24.3 | 13.9 | ○ | 0.096 | ○ | ○ | ○ | ○ | Inventive Example |
| 41 | 16 | 0.8 | 80 | 250 | 16.8 | ○ | 0.128 | ○ | ○ | ○ | ○ | Inventive Example |
| 42 | 16 | 0.8 | 55 | 32.2 | 28.9 | × | 0.141 | × | ○ | ○ | × | Comparative Example |
| 43 | 16 | 0.8 | 90 | 24.8 | 16.5 | ○ | 0.122 | ○ | ○ | ○ | ○ | Inventive Example |
| 44 | 17 | 0.8 | 80 | 24.8 | 16.4 | ○ | 0.119 | ○ | ○ | ○ | ○ | Inventive Example |
| 45 | 17 | 0.8 | 55 | 29.1 | 31.7 | × | 0.134 | × | ○ | ○ | × | Comparative Example |
| 46 | 17 | 0.8 | 90 | 24.7 | 16.2 | ○ | 0.114 | ○ | ○ | ○ | ○ | Inventive Example |
| 47 | 18 | 0.8 | 80 | 26.1 | 32.9 | × | 0.159 | × | × | ○ | × | Comparative Example |
| 48 | 18 | 0.8 | 55 | 33.1 | 33.8 | × | 0.161 | × | × | ○ | × | Comparative Example |
| 49 | 18 | 0.8 | 90 | 25.8 | 31.2 | × | 0.145 | × | × | ○ | × | Comparative Example |
| 50 | 19 | 0.8 | 80 | 26.8 | 33.9 | × | 0.131 | × | × | ○ | × | Comparative Example |
| 51 | 19 | 0.8 | 55 | 26.9 | 34.8 | × | 0.135 | × | × | ○ | × | Comparative Example |
| 52 | 19 | 0.8 | 90 | 25.8 | 31.7 | × | 0.130 | ○ | × | ○ | × | Comparative Example |
| 53 | - | None | 80 | 99.8 | - | × | 0.175 | × | - | ○ | × | Comparative Example |
| 54 | 20 | 0.8 | 80 | 23.8 | 10.7 | ○ | 0.081 | ○ | ○ | ○ | ○ | Inventive Example |
| 55 | 21 | 0.8 | 80 | 22.1 | 9.9 | ○ | 0.078 | ○ | ○ | ○ | ⊚ | Inventive Example |
| 56 | 22 | 0.8 | 80 | 21.8 | 9.6 | ○ | 0.074 | ○ | ○ | ○ | ⊚ | Inventive Example |
| 57 | 23 | 0.8 | 80 | 20.1 | 8.9 | ○ | 0.072 | ○ | ○ | ○ | ⊚ | Inventive Example |
| 58 | 24 | 0.8 | 80 | 22.4 | 9.7 | ○ | 0.079 | ○ | ○ | ○ | ⊚ | Inventive Example |
| 59 | 25 | 0.8 | 80 | 22.6 | 9.6 | ○ | 0.077 | ○ | ○ | ○ | ⊚ | Inventive Example |
| 60 | 26 | 0.8 | 80 | 21.9 | 9.8 | ○ | 0.078 | ○ | ○ | ○ | ⊚ | Inventive Example |

Underlined portions indicate items out of the range of the present invention.

### (1) Method for evaluating organic coating film coatability

The organic coating film coatability was evaluated by using the following method.

Five pieces having a size of 10 mm square which were cut from each of the organic resin-coated steel sheets described above were used as sample materials. For measurement, a Schottky field-emission-type SEM (Σigma, produced by Carl Zeiss) in which an energy-dispersive X-ray spectrometer (XFlash 5|30, produced by Burker) was installed was used.

In the vicinity of the center of each of three sample materials cut from each of the organic resin-coated steel sheets, characteristic X-ray images were captured from five fields of view at a magnification of 200 times. As the characteristic X-ray images, C-K line images were captured at an acceleration voltage of 15 kV. Based on the captured characteristic X-ray images, a thin film portion was defined as a region in which the C-K line intensity is equal to or lower than the intensity corresponding to a coating weight of 0.14 g/m², the area fraction of the thin film portions and the average area of the thin film portions were determined, and the average value of the area fractions of the thin film portions in fifteen fields of view and the average value of the average areas of the thin film portions in the fifteen fields of view were used for evaluation. Moreover, based on the area fraction of the thin film portions and the average area of the thin film portions which were determined as described above, a case where the area fraction of the thin film portions was 25% or less and the average area of the thin film portions was 10.0 µm² or less was judged as a case of particularly good organic resin coating film coatability (⊚), a case where the area fraction of the thin film portions was 25% or less and the average area of the thin film portions was more than 10.0 µm² was judged as a case of good organic resin coating film coatability (o), and a case where the area fraction of the thin film portions was more than 25% was judged as a case of poor organic resin coating film coatability (×).

### (2) Method for evaluating press formability (slidability)

To evaluate the press formability, the friction coefficient of each of the sample materials was measured by using the method described below.

Fig. 2 is a schematic front view illustrating a friction coefficient measurement apparatus. As illustrated in this figure, a sample 1 for friction coefficient measurement is fixed on a sample stage 2, and the sample stage 2 is fixed on the upper surface of a slide table 3 which is horizontally movable. A slide table support base 5 which has rollers 4 in contact with the lower surface of the slide table 3 and which is vertically movable is placed below the lower surface of the slide table 3, and a first load cell 7 for measuring a pressing load N which is applied to the sample 1 for friction coefficient measurement by a bead 6 as a result of the slide table support base 5 being pushed up is fixed on the slide table support base 5. A second load cell 8 for measuring a sliding resistance force F for moving the slide table 3 horizontally while the pressing load N described above is being applied is fixed on one end of the slide table 3. Here, as a lubrication oil, a wash oil for press forming, PRETON R352L produced by Sugimura Chemical Industrial Co., Ltd., was applied to the surface of the sample 1 when the test was performed.

Fig. 3 is a schematic perspective view illustrating the shape and dimensions of the bead used. Sliding is performed while the lower surface of the bead 6 is pressed against the surface of the sample 1. The bead 6 in Fig. 3 has a width of 10 mm, a length in the sample sliding direction of 59 mm, and a curvature radius R of 4.5 mm at the lower portions of both ends in the sliding direction, and the lower surface of the bead against which the sample is pressed has a flat surface having a width of 10 mm and a length in the sliding direction of 50 mm.

The test for measuring the friction coefficient was performed by using the bead illustrated in Fig. 3 under the conditions of a pressing load N of 400 kgf and a sample drawing speed (the horizontal movement speed of the slide table 3) of 20 cm/min. The friction coefficient µ between the sample material and the bead was calculated by using the equation µ = F/N. A case where the friction coefficient was 0.080 or less was judged as a case of particularly good slidability and denoted by (o), a case where the friction coefficient was 0.130 or less was judged as a case of good slidability and denoted by o, and a case where the friction coefficient was more than 0.130 was judged as unsatisfactory and denoted by ×.

### (3) Method for evaluating film removability

To determine the film removability of the organic resin-coated steel sheet, the test specimens were first subjected to a degreasing treatment by using an alkaline degreasing agent, that is, FINE CLEANER E6403 (produced by Japan Parkerizing Co., Ltd.). In this treatment, the test specimens were immersed in a degreasing solution having a degreasing agent concentration of 20 g/L at a temperature of 40°C for a predetermined time and were then washed with tap water. The surface carbon intensity of the test specimens which were subjected to this treatment was measured by using an X-ray fluorescence spectrometer, and the coating film removal ratio was calculated by using the following equation from the measured surface carbon intensity, the surface carbon intensity which was measured in advance before degreasing was performed, and the measured surface carbon intensity of the untreated steel sheet.

The film removability of the organic resin-coated steel sheets was evaluated in accordance with the evaluation criteria below based on the immersion time for which the test specimens were immersed in the alkaline degreasing solution until the coating film removal ratio reached 98% or higher.

### <Coating film removal ratio>

coating film removal ratio (%) = [(carbon intensity before degreasing - carbon intensity after degreasing)/(carbon intensity before degreasing - carbon intensity of untreated steel sheet)] × 100

### <Evaluation criteria>

⊚ good: 60 seconds or less
∘ applicable range: more than 60 seconds and 120 seconds or less
× not applicable: more than 120 seconds

### (4) Method for evaluation weldability

Each of the test specimens was subjected to a welding test for investigating consecutive spot weldability by using a DR-type Cr-Cu electrode under the conditions of a pressing force of 150 kgf, an energizing time of 10 cycles/60 Hz, and a welding current of 7.5 kA, and the weldability was evaluated based on the number of consecutive spots welded. The evaluation criteria are as follows.

### <Evaluation criteria>

o excellent: 5000 spots or more
× poor: less than 5000 spots

### (5) Comprehensive evaluation of coating film

A test specimen which was judged as o in the evaluation in (4) above, judged as ⊚ or o in the evaluation in (3) above, and judged as ⊚ in the evaluation in (1) and (2) above was judged as satisfactory (excellent): ⊚, a test specimen which was judged as ∘ in the evaluation in (4) above, judged as ⊚ or o in the evaluation in (3) above, and judged as ∘ in the evaluation in (1) and (2) above was judged as satisfactory (good): o, and a test specimen which was judged as × in the evaluation in at least one of (1) to (4) was judged as unsatisfactory: ×.

As can be seen from the evaluation results given in Table 2, all the examples of the present invention were judged as o or ⊚ in the comprehensive evaluation, which indicates that it is possible to obtain an organic resin-coated steel sheet excellent in terms of press formability, film removability, and weldability. In particular, in the case where the comprehensive evaluation is ⊚, it is possible to obtain an organic resin-coated steel sheet that is more excellent in terms of press formability.

### Industrial Applicability

The organic resin-coated steel sheet according to the present invention has excellent press formability and weldability and film removability in an applicable range and is therefore applicable in a wide range of fields including automotive body applications.

### Reference Signs List

- 1: sample for friction coefficient measurement
- 2: sample stage
- 3: slide table
- 4: roller
- 5: slide table support base
- 6: bead
- 7: first load cell
- 8: second load cell
- 9: rail

## Claims

1. An organic resin-coated steel sheet, the steel sheet having an organic resin coating film having an average coating weight per side after drying of 0.2 g/m² or more and 2.0 g/m² or less on at least one surface thereof,
wherein an area fraction of thin film portions in which a coating weight of the organic resin coating film is 0.14 g/m² or less is 25.0% or less.

2. The organic resin-coated steel sheet according to Claim 1, wherein an average area of the thin film portions is 10.0 µm² or less.

3. The organic resin-coated steel sheet according to Claim 1 or 2, wherein the area fraction of the thin film portions is determined by using a method in (1) and (2) below:
(1) by using an X-ray spectrometer which is installed in a SEM, a characteristic X-ray image of a C-K line of the surface of the organic resin-coated steel sheet is captured at an acceleration voltage of 5 kV or higher and 20 kV or lower; and
(2) based on the captured characteristic X-ray image of the C-K line, a thin film portion is defined as a region in which a characteristic X-ray intensity is equal to or lower than a threshold intensity corresponding to a local coating weight of 0.14 g/m², a non-thin film portion is defined as a region in which a characteristic X-ray intensity is higher than the threshold intensity, and the area fraction of the thin film portions is defined as (area of thin film portions)/((area of thin film portions) + (area of non-thin film portions)) × 100%.

4. The organic resin-coated steel sheet according to any one of Claims 1 to 3, wherein the organic resin coating film is a coating film containing at least one of an acrylic resin, a urethane resin, and a phenol resin.

5. The organic resin-coated steel sheet according to any one of Claims 1 to 4, wherein the organic resin coating film contains a wax in an amount of 50 mass% or less with respect to a total weight of the coating film.

6. The organic resin-coated steel sheet according to Claim 5, wherein the wax is a hydrocarbon-based wax.

7. The organic resin-coated steel sheet according to Claim 5 or 6, wherein an average particle diameter of the wax is 0.01 um or more and 4 um or less.

8. The organic resin-coated steel sheet according to any one of Claims 5 to 7, wherein the organic resin coating film contains an anionic polymer-type dispersant in an amount of 5.0 mass% or less with respect to the total weight of the coating film.
